# FASCICULE DE BREVET EUROPEEN

(11) **EP 2 860 668 B1**
(45) Date de publication et mention de la délivrance du brevet: **15.06.2016**
(21) Numéro de dépôt: 14187999.9
(22) Date de dépôt: 07.10.2014
(51) Int. Cl.: G06K 19/073, G06F 21/55, H04L 29/06

(54) **Procédé et dispositif de réalisation de fonction par un microcircuit**
Verfahren und Vorrichtung zur Funktionserfüllung durch einen Mikroschaltkreis
Method and device for performing a function by a microcircuit

(30) Priorité: 09.10.2013 FR 1359801
(43) Date de publication de la demande: 15.04.2015
(73) Titulaire: Oberthur Technologies, 92700 Colombes (FR)
(72) Inventeur: Chambley, Olivier, 92700 Colombes (FR)
(74) Mandataire: Santarelli

(56) Documents cités:
- EP-A1- 1 293 856
- FR-A1- 2 935 823

## Description

### DOMAINE DE L'INVENTION

L'invention concerne un procédé et un dispositif de réalisation de fonction par un microcircuit. Elle s'applique, en particulier, à la protection des cartes à microcircuits contre les attaques avec analyse de consommation électrique.

### CONTEXTE DE L'INVENTION

Afin d'améliorer la sécurité des données et programmes que les cartes à microcircuits conservent, les procédés de sécurisation couramment utilisés comprennent des étapes de vérification du fonctionnement normal du microcircuit, dans le but de détecter d'éventuelles anomalies dont une origine possible est une attaque.

A ce titre, aussi bien le fabricant que les développeurs d'applications pour ces microcircuits mettent en place des mécanismes de détection des attaques.

Par exemple, le fabricant peut inclure des détecteurs de conditions anormales d'alimentation (e.g. *glitches*) ou encore de lumière et les développeurs peuvent implémenter des contre-mesures consistant par exemple à vérifier l'intégrité des variables manipulées, ou encore tester la redondance des informations.

Lorsqu'une anomalie est détectée, la carte peut mettre en oeuvre une fonction de protection consistant par exemple à écrire une valeur donnée dans une zone de mémoire non-volatile réservée à un drapeau de destruction *(Killcard flag).*

Lorsque certaines conditions sont remplies (par exemple lorsqu'un certain nombre d'anomalies ont été détectées), cette fonction de protection peut avoir pour effet d'interdire tout fonctionnement ultérieur de la carte et/ou de supprimer les données stockées dans le microcircuit.

Cependant, les opérations d'écriture en mémoire non-volatile consomment beaucoup plus de courant que des opérations en mémoire vive. L'exécution d'une fonction de protection est donc facilement détectable par un attaquant, du fait de sa signature en consommation électrique particulière.

Lorsqu'un attaquant détecte cette signature particulière, il peut perturber physiquement le microcircuit (e.g. par perturbation de la fréquence d'horloge fournie au microcircuit ou par laser sur une zone du microcircuit), ou encore empêcher l'exécution de cette fonction de protection par exemple en coupant l'alimentation du microcircuit. L'opération d'écriture du drapeau de destruction permettant de protéger les données et programmes du microcircuit est alors interrompue.

Une contre-mesure connue du document FR2935823 consiste à utiliser une fonction leurre simulant la réalisation de la fonction de protection et mise en oeuvre lorsque le microcircuit ne détecte pas d'attaque.

Toutefois, la protection du microcircuit par la réalisation de telles fonctions leurre allonge le temps de traitement en fonctionnement normal, ce qui n'est pas souhaitable.

### RESUME DE L'INVENTION

La présente invention a ainsi pour objet de pallier au moins un de ces inconvénients.

Dans ce contexte, un premier aspect de l'invention concerne un procédé de réalisation de fonction par un microcircuit, comprenant :
au moins une étape de détermination de si une anomalie est détectée ou de si le fonctionnement du microcircuit est normal ;
lorsqu'il est déterminé qu'une anomalie est détectée, une étape de réalisation d'une fonction de protection ;
lorsqu'il est déterminé que le fonctionnement du microcircuit est normal, une étape de réalisation d'une fonction leurre simulant la fonction de protection en étant perceptible, depuis l'extérieur du microcircuit, de manière sensiblement identique à la fonction de protection ;
ledit procédé étant caractérisé en ce qu'un temporisateur permet d'interrompre la réalisation de la fonction leurre.

Corrélativement, un deuxième aspect de l'invention concerne un dispositif de réalisation de fonction par un microcircuit, comportant :
des moyens de détermination de si une anomalie est détectée ou de si le fonctionnement du microcircuit est normal ; et
des moyens de contrôle adaptés :
   lorsqu'il est déterminé qu'une anomalie est détectée, à réaliser une fonction de protection ;
   lorsqu'il est déterminé que le fonctionnement du microcircuit est normal, à réaliser une fonction leurre simulant la fonction de protection en étant perceptible, depuis l'extérieur du microcircuit, de manière
      sensiblement identique à la fonction de protection ;
ledit dispositif étant caractérisé en ce que les moyens de contrôle utilisent un temporisateur afin d'interrompre la réalisation de la fonction leurre.

La réalisation de la fonction leurre ne dépendant pas de la durée de réalisation de la fonction de protection, il est alors possible de réduire le temps de calcul de la fonction leurre tout en conservant son effet premier, à savoir simuler les premiers instants de la réalisation de la fonction de protection.

Même si aucune anomalie de sécurité n'est détectée par le microcircuit, la fonction leurre simule le début de la réalisation de la fonction de protection, de sorte qu'un attaquant croie percevoir la réalisation de la fonction de protection et perturbe alors le fonctionnement du microcircuit.

Ainsi, on exploite le fait que dès les premiers instants de la réalisation, la signature de la fonction leurre est identique à celle de la fonction de protection, du point de vue de l'attaquant.

Par ailleurs, il est possible que l'attaquant, bien que détectant une signature caractéristique de la fonction de protection, choisisse de ne pas perturber la réalisation de cette fonction (qui peut être effectivement la fonction de protection ou bien la fonction leurre). Dans ce cas, lorsque son attaque a été détectée par le microcircuit, il laisse en réalité la fonction de protection s'exécuter, et lorsque son attaque n'a pas été détectée et que le fonctionnement du circuit est considéré comme normal, les informations perçues par l'attaquant seront erronées car relèveront de la fonction leurre dont la durée de mise en oeuvre est régie de façon indépendante de la fonction de protection, par le temporisateur. Dans les deux cas, la protection du microcircuit est améliorée.

D'autres caractéristiques du procédé et du dispositif selon des modes de réalisation de l'invention sont décrites dans les revendications dépendantes.

Dans un mode particulier de réalisation de l'invention, l'étape de détermination du fonctionnement normal du circuit comprend une étape de mesure d'au moins un paramètre de la liste suivante : température, tension d'alimentation, désadaptation (*glitches*)*,* lumière, fréquence d'horloge.

Dans un mode particulier de réalisation de l'invention, l'étape de détermination du fonctionnement normal du circuit comprend une étape de comparaison des résultats de deux exécutions, ou une étape de vérification d'une relation entre deux variables de calcul, ou une étape de vérification d'une propriété d'une variable.

La fonction de protection est par exemple une fonction de mise hors service du microcircuit comme une fonction *Killcard* consistant à écrire une donnée dans une zone de mémoire non-volatile réservée à un drapeau de destruction (*Killcard flag*) tel que précité.

Sous certaines conditions, la détection de ce drapeau de destruction peut par exemple provoquer le blocage du fonctionnement de la carte (via l'arrêt du programme en cours d'exécution et l'empêchement d'une réinitialisation de la carte), ou en variante la destruction immédiate des données qu'elle contient.

Dans un mode particulier de réalisation de l'invention, la fonction leurre a une consommation électrique identique à celle de la fonction de protection ; ou la fonction leurre a un rayonnement électromagnétique sensiblement identique à celui de la fonction de protection.

En variante, une grandeur physique perceptible de l'extérieur du microcircuit, modulée par la fonction de protection et la fonction leurre peut être un champ électromagnétique, une résistance, une capacité, une inductance, une tension, ou une intensité.

Dans un mode particulier de réalisation de l'invention, la fonction de protection comprend un accès à une première zone d'une mémoire non-volatile, et la fonction leurre comprend un accès à une seconde zone de cette mémoire non-volatile, différente de la première zone.

Cet accès peut être par exemple un accès en lecture ou en écriture.

A cet effet, dans un mode particulier de réalisation de l'invention, la fonction de protection comprend une commande d'écriture d'une donnée prédéterminée dans la première zone de la mémoire non-volatile. La fonction leurre peut alors comprendre une commande d'écriture dans la deuxième zone de la mémoire non-volatile.

Ainsi, dans un mode particulier de réalisation de l'invention, le temporisateur interrompt l'exécution de la commande d'écriture de la fonction leurre.

Le temps de calcul nécessaire à l'exécution de la commande d'écriture est ainsi réduit, le fonctionnement du microcircuit est donc accéléré par rapport à l'art antérieur où la commande d'écriture n'est pas interrompue en cours d'exécution.

Dans un mode particulier de réalisation de l'invention, l'exécution des commandes d'écriture de la fonction de protection ou de la fonction leurre mettent en oeuvre un algorithme différent des commandes d'écriture dans la mémoire non-volatile, effectuées lors du fonctionnement normal du microcircuit.

En particulier, l'algorithme peut être différent de manière logicielle ou matérielle, ce dernier cas d'appliquant lorsque les zones de la mémoire concernées sont de natures différentes.

Dans un mode particulier de réalisation de l'invention, au moins une des commandes d'écriture ne fait intervenir aucune donnée de vérification. Notamment, on ne met pas en oeuvre de somme de vérification *(Checksum).*

Dans un mode particulier de réalisation de l'invention, au moins une des commandes d'écriture ne comprend pas la relecture de la donnée écrite.

Dans un mode particulier de réalisation de l'invention, au moins une des commandes d'écriture ne comprend pas d'effacement de la zone d'écriture.

Ces dispositions permettent chacune d'accélérer l'écriture en mémoire non-volatile, réduisant ainsi le risque d'une action de l'attaquant pour perturber le microcircuit avant la réalisation complète de la fonction de protection, sans pour autant que les signatures des différentes fonctions soient différentes jusqu'à interruption de la réalisation de la fonction leurre.

Par ailleurs, le fonctionnement global du microcircuit est accéléré puisque le temps de calcul nécessaire à la mise en oeuvre des commandes d'écriture sans effacement de la zone d'écriture, sans vérification et/ou sans relecture est réduit.

Enfin, puisque le temporisateur permet d'interrompre la mise en oeuvre de la fonction leurre avant la fin de son exécution, et donc au cours de la mise en oeuvre de ces opérations élémentaires (génération, écriture, relecture...), la récupération d'information sur ces opérations élémentaires par l'attaquant est complexifiée.

Dans un mode particulier de réalisation de l'invention, le procédé comprend en outre une étape de lancement du temporisateur, une étape d'expiration du temporisateur et à l'expiration du temporisateur, une étape d'exécution d'une commande d'interruption de la réalisation de la fonction leurre.

Ainsi, la durée du temporisateur peut être ajustée de sorte à ce que l'attaquant perçoive une partie de la signature suffisante pour être convaincu de la réalisation en cours d'une fonction de protection.

Les avantages, buts et caractéristiques particulière du dispositif sont similaires à ceux du procédé précité.

Dans un mode particulier de réalisation, les différentes étapes du procédé précité sont déterminées par des instructions de programmes d'ordinateurs.

En conséquence, l'invention vise aussi un programme d'ordinateur sur un support d'informations, ce programme étant susceptible d'être mis en oeuvre par un microprocesseur, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un microprocesseur, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en oeuvre.

### BREVE DESCRIPTION DES FIGURES

D'autres particularités et avantages de l'invention apparaîtront encore dans la description ci-après, illustrée par les figures ci-jointes qui en illustrent des exemples de réalisation dépourvus de tout caractère limitatif. Sur les figures :
- La **Figure 1** représente schématiquement un dispositif conforme à un mode de réalisation particulier de l'invention,
- La **Figure 2** représente sous forme d'organigramme, les principales étapes d'un procédé selon un mode particulier de réalisation de l'invention,
- La **Figure 3** représente schématiquement sous forme de chronogrammes, la réalisation de la fonction de protection et de la fonction leurre et la perception par l'attaquant de la réalisation de ces fonctions,
- La **Figure 4** représente sous forme d'organigramme, un algorithme d'écriture en mémoire non-volatile courant pouvant être utilisée par les fonctions de protection et leurre, et
- La **Figure 5** représente sous forme d'organigramme, un algorithme d'écriture en mémoire non-volatile simplifié pouvant être utilisée par les fonctions de protection et leurre.

### DESCRIPTION DETAILLEE DE L'INVENTION

Dans la description qui va suivre, la grandeur physique perceptible depuis l'extérieur du microcircuit considérée à titre d'exemple non limitatif est la consommation électrique, du fait que les attaques les plus couramment rencontrées aujourd'hui la concernent.

Cependant, la présente invention ne se limite pas à ce type de grandeur physique modulée lors de la réalisation d'une fonction de protection ou d'une fonction leurre mais s'étend, bien au contraire, à toutes les grandeurs physiques modulées perceptibles à l'extérieur d'un microcircuit, par contact avec ce microcircuit ou avec des liaisons reliées à lui ou à distance.

Ainsi, une grandeur physique modulée concernée par la présente invention peut être un rayonnement ou un champ électromagnétique, une résistance, une capacité, une inductance, une tension, une intensité ou une consommation électrique, par exemple.

De façon générale, au cours du fonctionnement normal du microcircuit, une fonction leurre simulant une fonction de protection réalisée lorsqu'une anomalie est détectée, est réalisée en modulant chaque grandeur physique prédéterminée perceptible à l'extérieur du microcircuit de manière sensiblement identique à la fonction de protection.

La mise en oeuvre ou réalisation de cette fonction leurre est interrompue de sorte à réduire le temps de calcul correspondant. Cette interruption se produit de sorte à ce que l'attaquant perçoive une partie suffisante de la signature de la fonction leurre pour être convaincu de la réalisation en cours d'une fonction de protection.

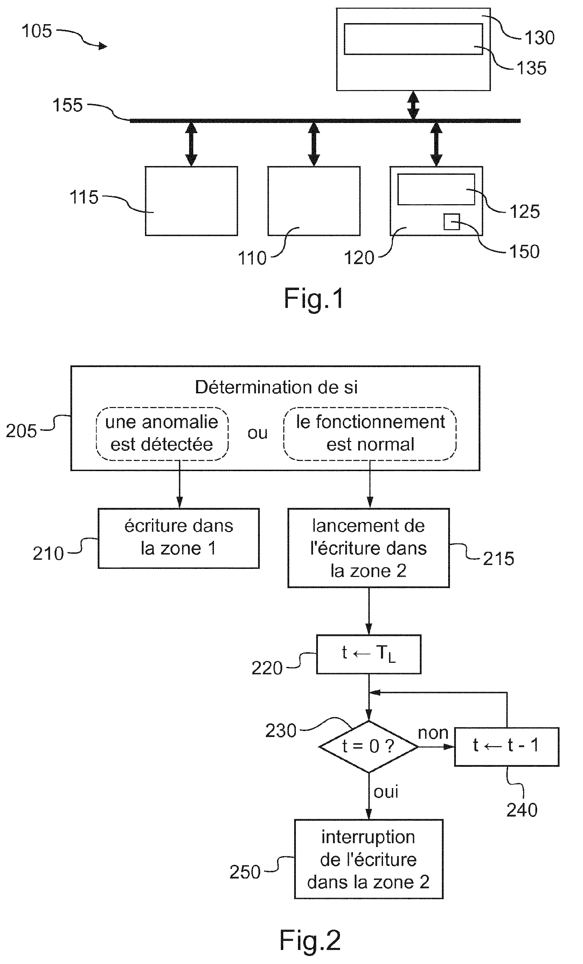

La **Figure 1** représente une carte à microcircuit 105 comportant les éléments suivants reliés entre eux par un bus 155 :
- un microprocesseur 110,
- des entrées/sorties 115,
- une mémoire morte 120 stockant un système d'exploitation 125, et
- une mémoire non-volatile 130 comportant une matrice de mémoire 135 et directement contrôlée par le microprocesseur 110.

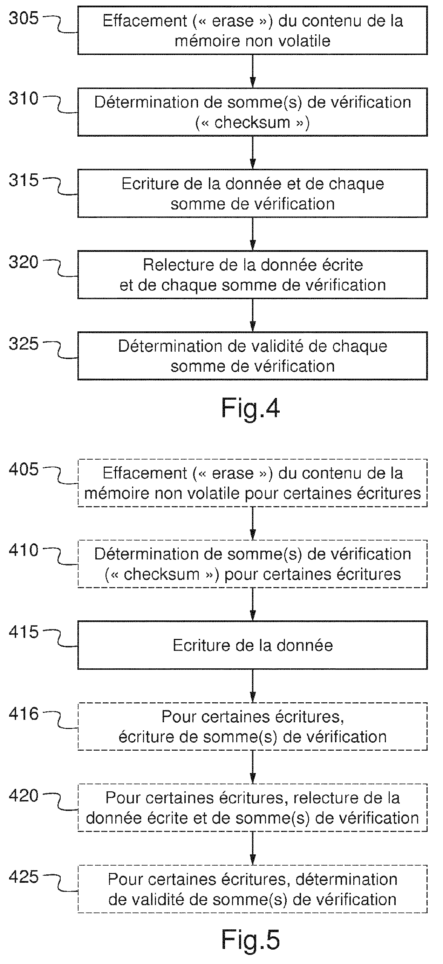

Un programme 150 d'écriture simplifié (ou algorithme d'écriture simplifié), dont les instructions sont représentées sur la Figure 5 décrite ultérieurement, est stocké par exemple dans la mémoire morte 120 ou dans la mémoire non-volatile 130. En variante, le programme 150 est directement implémenté par le système d'exploitation 125 stocké en mémoire morte 120. Ainsi ces mémoires peuvent constituer un support d'informations au sens de l'invention.

La mémoire morte 120 ou la mémoire non-volatile 130 stockent des instructions d'un programme de fonctionnement de la carte 105. Ce programme met notamment en oeuvre les étapes du mode de réalisation particulier illustré sur la Figure 2.

En particulier, au cours de son fonctionnement, la carte à microcircuit détermine (étape 205) si une anomalie est détectée ou si le fonctionnement de la carte est normal.

En pratique, cette étape consiste par exemple à vérifier une somme de contrôle ou de vérification *(Checksum),* c'est-à-dire à vérifier que des données inscrites en mémoire sont bien cohérentes avec la somme de vérification associée à ces données. En variante, la détermination peut par exemple être basée sur la comparaison des résultats obtenus par deux mises en oeuvre d'un même algorithme.

Si une anomalie est détectée, une fonction de protection, destinée à protéger la carte et/ou son contenu est réalisée (c'est-à-dire mise en oeuvre).

Et même si aucune anomalie n'est détectée, c'est-à-dire s'il est déterminé que le fonctionnement est normal, une fonction leurre simulant la fonction de protection en étant configurée de sorte à être perceptible, depuis l'extérieur dudit microcircuit, de manière sensiblement identique à la fonction de protection est mise en oeuvre en partie.

Un temporisateur contrôlé par le microprocesseur 110 et dont la valeur est prédéterminée, permet d'interrompre la mise en oeuvre de la fonction leurre précitée avant l'achèvement complet de sa réalisation simulant la réalisation de la fonction de protection.

Dans des modes de réalisation simples, la fonction leurre est configurée de manière identique à la fonction de protection, à une valeur de paramètre ou de variable près.

Comme illustré sur la **Figure 2****,** dans un mode particulier de réalisation, la fonction de protection consiste, au cours d'une étape 210, à écrire une donnée prédéterminée dans une première zone Z1 d'une mémoire non-volatile.

Il s'agit, par exemple, de mettre à une valeur prédéterminée un drapeau de destruction, en écrivant une donnée prédéterminée dans une première zone Z1 de la mémoire non-volatile 130 spécifiquement dédiée à ce drapeau. Autrement dit, la présence de cette donnée prédéterminée dans cette première zone Z1 est le résultat de la réalisation ou de la mise en oeuvre de cette fonction de protection.

Ainsi, l'écriture d'une telle donnée dans une zone de mémoire différente de cette première zone Z1 dédiée au drapeau, n'est pas prise en compte par la carte comme appelant par exemple au blocage du fonctionnement de la carte (via l'arrêt du programme en cours d'exécution et l'empêchement d'une réinitialisation de la carte), ou en variante à la destruction immédiate des données qu'elle contient.

Dans ce mode de réalisation, même si aucune anomalie n'est détectée, c'est-à-dire si le fonctionnement du circuit est déterminé comme étant normal, on effectue une étape 215 de lancement, ici par le microprocesseur, de la réalisation d'une fonction leurre configurée pour avoir la même signature, en termes de consommation électrique, que l'écriture par la fonction de protection d'une donnée prédéterminée dans la première zone Z1 de la mémoire non-volatile.

Dans un mode de réalisation simple, la fonction leurre consiste à écrire une donnée en mémoire non-volatile 130, dans une deuxième zone Z2, différente de la première zone Z1.

On rappelle que cette deuxième zone Z2 n'est pas la zone dédiée au drapeau (première zone Z1) et que donc l'écriture d'une donnée, quelle qu'elle soit, dans cette zone ne sera pas interprétée par la carte comme une valeur de drapeau de destruction appelant par exemple à la destruction immédiate des données qu'elle contient ou au blocage du fonctionnement de la carte, comme c'est le cas lors de la mise en oeuvre de la fonction de protection.

Immédiatement après le lancement de la réalisation de l'écriture par fonction leurre, un temporisateur est lancé au cours d'une étape 220. Plus précisément, cette étape consiste à déclencher un compte à rebours d'une durée T_{L} au bout de laquelle le temporisateur expire. Ainsi, à l'issue de cette étape 220, le temps courant du compte à rebours t = T_{L}.

Un test 230 permet de voir si le compte à rebours est expiré, c'est-à-dire si le temps courant du compte à rebours t = 0.

Si tel n'est le cas, c'est-à-dire si t > 0, le temps courant du compte à rebours t est par exemple décrémenté d'une unité : t ← t - 1 au cours d'une étape 240, puis le procédé reboucle à l'étape de test 230.

Si tel est le cas, c'est-à-dire si t = 0, cela signifie que le compte à rebours est expiré, et l'étape de test 230 est alors suivie d'une étape d'interruption de l'écriture par la fonction leurre lancée à l'étape 215.

Dans une variante de ce mode de réalisation particulier, un exemple de code (ou série d'instructions) pouvant être utilisé pour implémenter un procédé selon un autre mode de réalisation de l'invention est le suivant :

```
       EE_CONTROL = 1; // préparation de l'écriture
       If (Anomaly) *(char *) Z1 = 0x55; // lorsqu'une anomalie est détectée,
      l'adresse indiquée pour d'écriture de la donnée 55 est la zone 1
       Else *(char *) Z2 = 0x55; // lorsque le fonctionnement est normal, l'adresse
      indiquée pour d'écriture de la donnée 55 est la zone 2
       TW = 500; // initialisation du temporisateur
       TF= 0; // initialisation d'un drapeau (flag) d'expiration du temporisateur
       TR = 1; // lancement du temporisateur (lorsque le temporisateur ne
       fonctionne pas, TR = 0)
       EE_CONTROL = 2; // lancement de l'écriture
       While (!TF) ; // tant que le temporisateur n'est pas expiré, l'écriture se
      poursuit
       If (Anomaly) While(EE_CONTROL = 2); // à l'expiration du temporisateur,
      si une anomalie est détectée, l'écriture continue
       Else EE_CONTROL = 0; // à l'expiration du temporisateur, si le
      fonctionnement est normal, l'écriture est interrompue
```

Dans cet exemple, la variable EE_CONTROL permet de contrôler l'écriture d'une donnée :
- lorsque cette variable vaut 0, le microprocesseur n'écrit pas ;
- lorsque cette variable vaut 1, le microprocesseur est informé qu'une écriture va démarrer ;
- lorsque cette variable vaut 2, le microprocesseur exécute l'écriture.

Ici, de façon non limitative, le temporisateur est initialisé à TW = 500 coups d'horloge. En variante, le temporisateur peut être basé sur un autre élément que l'horloge.

Un drapeau indiquant l'expiration du temporisateur est mis à TF = 0, signifiant ainsi que le temporisateur n'a pas expiré. Cette initialisation est notamment nécessaire dans le cas où le temporisateur a expiré au cours d'une itération précédente (dans ce cas TF = 1). L'initialisation de TW et TF peuvent se faire indifféremment dans l'ordre exposé ici, ou bien dans l'ordre inverse.

Suite à l'initialisation du drapeau d'expiration TF et du temporisateur TW, le temporisateur est lancé : TR = 1 et tant que le drapeau d'expiration n'est pas à la valeur TF = 0, le microprocesseur exécute l'écriture. A l'expiration du temporisateur, si une anomalie est détectée, l'écriture se poursuit et sinon, l'écriture est interrompue.

On notera que contrairement à ce qui est fait dans l'art antérieur, la durée de réalisation de la fonction leurre ne dépend pas directement de la durée de réalisation de la fonction de protection, puisque le temporisateur utilisé est indépendant de la fonction de protection. Ainsi la réalisation de cette fonction leurre peut être écourtée par rapport à l'art antérieur, ce qui permet d'économiser du temps de calcul et de ne pas trop ralentir le fonctionnement du microcircuit tout en assurant sa protection.

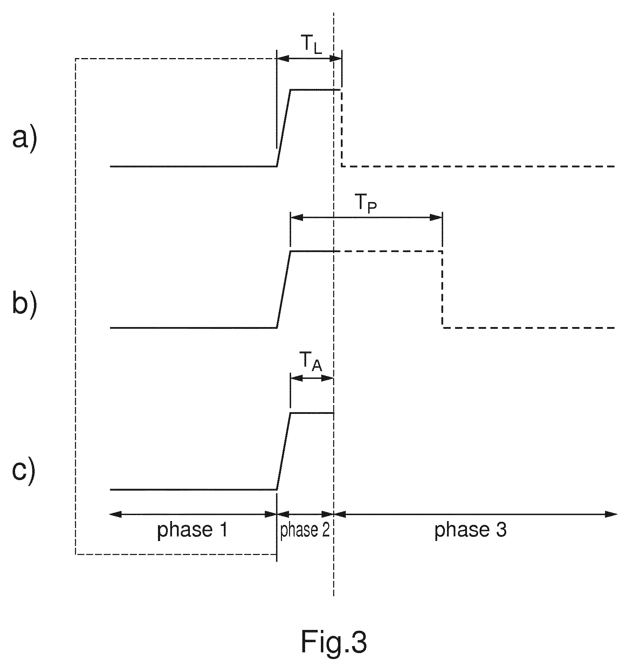

En référence à la **Figure 3****,** trois chronogrammes représentent schématiquement les signatures perceptibles lors de la réalisation de la fonction leurre (a) et de la fonction de protection (b) et la perception par l'attaquant (c) de la réalisation de ces fonctions.

Au cours d'une première phase (phase 1), l'étape de détermination 205 permet de déterminer si le fonctionnement du microcircuit est normal (chronogramme a) ou si une anomalie est détectée (chronogramme b). Cette étape de détermination 205 est transparente pour l'attaquant (chronogramme c) puisqu'elle n'engendre *a priori* pas d'écriture en mémoire non-volatile.

Au cours d'une deuxième phase (phase 2), selon le résultat de l'étape de détermination 205 :
- la mise en oeuvre d'une fonction leurre est lancée (chronogramme a) ainsi que le compte à rebours tel que précité, ou bien
- la mise en oeuvre d'une fonction de protection est lancée (chronogramme b).

Ces deux fonctions comprenant une écriture en mémoire non-volatile, leurs signatures sont perceptibles de manière équivalente par l'attaquant (chronogramme c), qui décide alors par exemple de couper l'alimentation du microcircuit au bout du temps T_{A} (fin de la phase 2).

La phase 3 représente la suite de la réalisation des fonctions dans le cas où l'attaquant ne coupe pas l'alimentation du circuit à la fin de la phase 2 (tel que représenté sur la Figure 3). Dans ce cas :
- la fonction leurre mise en oeuvre au cours de la phase 2 (chronogramme a) est interrompue lorsque le compte à rebours T_{L} est expiré, ou bien
- la fonction de protection mise en oeuvre au cours de la phase 2 (chronogramme b) se déroule de façon complète, et le drapeau de destruction est bien écrit dans la zone appropriée.

L'attaquant n'ayant pas coupé l'alimentation bien qu'une consommation électrique élevée ait été détectée, il laisse nécessairement s'exécuter la fonction de protection dès que son attaque a été détectée.

De plus, la mise en oeuvre de la fonction leurre étant interrompue avant son exécution complète, le temps de calcul dû à cette exécution est limité par rapport à l'art antérieur.

On choisit T_{L} de manière à ce que la première zone Z1 soit modifiée par une écriture pendant T_{L}.

En pratique, la durée du temporisateur T_{L} peut être fixée à environ un quart de la durée de la fonction de protection T_{P}, de sorte à ce que l'effet de migration des électrons pour l'écriture ait lieu.

A titre d'exemple, la durée de réalisation de la fonction de protection T_{P} équivaut à la durée d'une écriture, soit environ 1 ms à 2 ms. Le temps T_{A} nécessaire à la détection d'une écriture est généralement de l'ordre de la microseconde.

Selon le type d'écriture pratiquée (classique ou simplifiée), la durée du temporisateur T_{L} peut ainsi être prise entre 0,25 ms et 0,5 ms.

De retour à la Figure 2, pour que les signatures des fonctions leurre et de protection soient les plus proches possible, la fonction leurre est configurée pour utiliser le même algorithme d'écriture que la fonction de protection.

Par exemple, si la fonction *Killcard*(Z1) est utilisée lorsqu'il est déterminé qu'une anomalie est détectée, la fonction *Killcard*(Z2) est mise en oeuvre lorsqu'il n'y a pas de détection d'une anomalie c'est-à-dire lorsque le microcircuit fonctionne normalement.

Un code, ou série d'instructions, correspondant est le suivant:

```
                  If anomaly detected {
                  Complete processing of the current APDU;
                  Killcard(Z1);
                  }
                  Else {
                  Complete processing of the current APDU
                  Killcard(Z2);
                  }
```

Dans ce cadre, la **Figure 4** représente un exemple de fonction *Killcard* pouvant être utilisée par les fonctions de protection et leurre. Cette fonction comprend une commande d'écriture constituée d'instructions correspondant à un algorithme courant d'écriture d'une donnée en mémoire non-volatile.

Un tel algorithme comporte :
- une étape 305 d'effacement de la zone d'écriture (ici, selon la fonction mise en oeuvre, la zone 1 ou la zone 2),
- une étape 310 de détermination d'au moins une somme de vérification (en anglais «checksum ») à partir de la donnée qui doit être écrite,
- une étape 315 d'écriture de la donnée et de chaque somme de vérification déterminée lors de l'étape 310,
- une étape 320 de relecture de la donnée écrite et de chaque somme de vérification et
- une étape 325 de détermination de la validité des sommes de vérification en refaisant, sur les données lues, une détermination de chaque somme de vérification correspondante et en la comparant avec la somme de vérification lue.

Ainsi, cet algorithme classique d'écriture est relativement long, ce qui ralentit le fonctionnement du microcircuit.

A noter que la durée d'un algorithme classique d'écriture peut durer environ 2 ms à 4 ms, dont la moitié environ est consacrée à l'effacement de la zone d'écriture. La phase de vérification étant relativement rapide (quelques dizaines de microsecondes).

Dans le but d'éviter ces inconvénients, il est possible d'utiliser une version modifiée de la fonction *Killcard* comprenant des instructions correspondant à un algorithme d'écriture simplifié par rapport à celui de la Figure 4. Un tel algorithme présente une durée d'exécution réduite, par exemple 1 ms.

Un exemple d'une telle fonction *Killcard* modifiée utilisant un algorithme d'écriture simplifié est représenté sur la **Figure 5****.**

En pratique, afin de ne pas perturber l'exécution de commandes d'écritures en fonctionnement normal, le microprocesseur de la carte détermine préalablement à l'exécution d'une commande d'écriture si la commande concerne l'une des zones 1 ou 2 de la mémoire non-volatile.

Si non, cela signifie que cette commande d'écriture n'est pas relative à la fonction de protection ni à la fonction leurre, et l'algorithme d'écriture courant de la Figure 4 est réalisé.

Si oui, cela signifie que cette commande d'écriture est relative à la fonction de protection ou à la fonction leurre et un algorithme d'écriture simplifié, tel que représenté à la Figure 5, est utilisé.

Cet algorithme d'écriture simplifié ne comporte :
- pas l'étape d'effacement de la zone d'écriture ; cette étape est éventuellement maintenue pour certaines écritures choisies aléatoirement ou cycliquement, au cours d'une étape 405,
- pas l'étape de détermination d'au moins une somme de vérification (en anglais *Checksum) ;* cette étape est éventuellement maintenue pour certaines écritures choisies aléatoirement ou cycliquement, au cours d'une étape 410,
- pas d'étape d'écriture de somme(s) de vérification ; cette étape est éventuellement maintenue au cours d'une étape 416 pour chaque somme de vérification déterminées au cours d'une étape 410,
- pas l'étape de relecture de la donnée écrite ; cette étape est éventuellement maintenue au cours d'une étape 420 pour les données ayant donné lieu à détermination d'au moins une somme de vérification,
- pas l'étape de détermination de la validité des sommes de vérification en refaisant, sur les données lues, une détermination de chaque somme de vérification correspondante ; cette étape est éventuellement maintenue au cours d'une étape 425, pour les données ayant donné lieu à détermination d'au moins une somme de vérification.

Ainsi, dans un mode de réalisation envisageable, l'algorithme d'écriture en mémoire non-volatile, utilisé par les fonctions de protection et leurre, ne comporte que:
- l'étape 415 d'écriture de la donnée et
- seulement pour certaines écritures de données choisies aléatoirement ou cycliquement, l'étape 405 d'effacement de la zone d'écriture et/ou les étapes 410, 416, 420 et 425.

En variante de ce mode dans lequel le même algorithme d'écriture est utilisé par la fonction de protection et par la fonction leurre, la fonction de protection, appelée *Killcardl*(Z1) peut utiliser un algorithme d'écriture différent de celui utilisé par la fonction leurre, appelée, par exemple, *Killcard2*(Z2)*.*

Par exemple, la fonction de protection peut utiliser l'algorithme d'écriture courant et la fonction leurre peut utiliser un algorithme d'écriture simplifié comme par exemple celui de la Figure 5.

Ainsi, dans certains modes de réalisation, l'écriture en mémoire non-volatile par la fonction de protection comporte la génération, l'écriture, la relecture et la vérification de somme(s) de vérification alors que l'écriture en mémoire non-volatile par la fonction leurre ne les comporte pas.

En variante, comme exposé ci-avant, seule certaines écritures (sélectionnées cycliquement ou aléatoirement) effectuées par la fonction leurre comportent la génération, l'écriture, la relecture et la vérification de somme(s) de vérification.

Dans ces deux derniers cas, l'usure de la mémoire non-volatile est réduite, la vitesse de fonctionnement normal du microcircuit est augmentée, tout en complexifiant la reconnaissance de la réalisation de la fonction de protection par un attaquant extérieur.

Quoi qu'il en soit, la durée de la réalisation de la fonction leurre ne dépend pas de la durée de ces opérations élémentaires (génération, écriture, relecture...) puisque le temporisateur permet d'interrompre la mise en oeuvre de la fonction leurre avant la fin de la mise en oeuvre de telle(s) opération(s).

Cela permet de complexifier la récupération d'information sur ces opérations élémentaires par l'attaquant.

On note que la présente invention peut être mise en oeuvre sous la forme d'un programme s'exécutant dans le microcircuit ou sous la forme d'un circuit intégré spécialisé, par exemple un ASIC (pour *Application-Specific Integrated Circuit*), un circuit logique programmable ou un circuit intégré logique qui peut être reprogrammé après sa fabrication.

Dans des modes de réalisation, une entité électronique de poche ou portable comporte un dispositif de protection d'un microcircuit qui met en oeuvre le procédé de protection objet de la présente invention.

Par exemple, cette entité électronique est un PDA (« *personal digital assistant»* pour assistant personnel numérique), une clef USB, une carte mémoire, un téléphone mobile, un passeport électronique ou une carte à microcircuit (c'est-à-dire conforme à la norme ISO 7816 et sécurisée, par exemple certifiée conformément aux critères communs).

Les exemples qui précèdent ne sont que des modes de réalisation de l'invention qui ne s'y limite pas.

## Revendications

1. Procédé de réalisation de fonction par un microcircuit, comprenant :
au moins une étape de détermination (205) de si une anomalie est détectée ou de si le fonctionnement du microcircuit est normal ;
lorsqu'il est déterminé qu'une anomalie est détectée, une étape de réalisation (210) d'une fonction de protection ;
lorsqu'il est déterminé que le fonctionnement du microcircuit est normal, une étape de réalisation (215) d'une fonction leurre simulant la fonction de protection en étant perceptible, depuis l'extérieur du microcircuit, de manière sensiblement identique à la fonction de protection ;
ledit procédé étant **caractérisé en ce qu'**il comprend une interruption (250) de la réalisation de la fonction leurre par un temporisateur.

2. Procédé selon la revendication 1, **caractérisé en ce que** la fonction leurre a une consommation électrique sensiblement identique à celle de la fonction de protection ; ou la fonction leurre a un rayonnement électromagnétique sensiblement identique à celui de la fonction de protection.

3. Procédé selon l'une quelconque des revendications 1 à 2, **caractérisé en ce que** la fonction de protection comprend un accès à une première zone (Z1) d'une mémoire non-volatile (130), et **en ce que** la fonction leurre comprend un accès à une seconde zone (Z2) de cette mémoire non-volatile (130), différente de la première zone (Z1).

4. Procédé selon la revendication 3, **caractérisé en ce que** la fonction de protection comprend une commande d'écriture d'une donnée prédéterminée dans la première zone (Z1) de la mémoire non-volatile (130).

5. Procédé selon l'une quelconque des revendications 3 à 4, **caractérisé en ce que** la fonction leurre comprend une commande d'écriture dans la deuxième zone (Z2) de la mémoire non-volatile (130).

6. Procédé selon la revendication 5, **caractérisé en ce que** le temporisateur interrompt l'exécution de la commande d'écriture de la fonction leurre.

7. Procédé de sécurisation selon l'une quelconque des revendications 4 à 6, **caractérisé en ce que** l'exécution des commandes d'écriture de la fonction de protection ou de la fonction leurre mettent en oeuvre un algorithme différent des commandes d'écriture dans la mémoire non-volatile, effectuées lors du fonctionnement normal du microcircuit.

8. Procédé selon l'une quelconque des revendications 4 à 7, **caractérisé en ce qu'**au moins une des commandes d'écriture ne fait intervenir aucune donnée de vérification.

9. Procédé selon l'une quelconque des revendications 4 à 8, **caractérisé en ce qu'**au moins une des commandes d'écriture ne comprend pas la relecture de la donnée écrite.

10. Procédé selon l'une quelconque des revendications 4 à 9, **caractérisé en ce qu'**au moins une des commandes d'écriture ne comprend pas d'effacement de la zone d'écriture.

11. Procédé selon l'une quelconque des revendications 1 à 10, **caractérisé en ce qu'**il comprend une étape de lancement du temporisateur, une étape d'expiration du temporisateur et à l'expiration du temporisateur, une étape d'exécution (250) d'une commande d'interruption de la réalisation de la fonction leurre.

12. Procédé selon l'une quelconque des revendications 1 à 11, **caractérisé en ce que** la fonction de protection est une fonction de mise hors service du microcircuit.

13. Programme d'ordinateur comprenant des instructions pour la mise en oeuvre d'un procédé selon l'une quelconque des revendications 1 à 12, lorsqu'il est chargé et exécuté par un microprocesseur.

14. Support d'informations lisible par un microprocesseur, comprenant les instructions d'un programme d'ordinateur pour mettre en oeuvre un procédé selon l'une quelconque des revendications 1 à 12.

15. Dispositif de réalisation de fonction par un microcircuit, comportant :
des moyens de détermination (110, 120, 130, 150) de si une anomalie est détectée ou de si le fonctionnement du microcircuit est normal ; et
des moyens de contrôle (110, 120, 130, 150) adaptés :
lorsqu'il est déterminé qu'une anomalie est détectée, à réaliser une fonction de protection ;
lorsqu'il est déterminé que le fonctionnement du microcircuit est normal, à réaliser une fonction leurre simulant la fonction de protection en étant perceptible, depuis l'extérieur du microcircuit, de manière sensiblement identique à la fonction de protection ;
ledit dispositif étant **caractérisé en ce que** les moyens de contrôle utilisent un temporisateur afin d'interrompre la réalisation de la fonction leurre.

## Patentansprüche

1. Verfahren zum Funktionserfüllen durch einen Mikroschaltkreis, das Folgendes umfasst:
mindestens einen Schritt des Bestimmens (205), ob eine Anomalie erfasst wird, oder ob der Betrieb des Mikroschaltkreises normal ist,
wenn bestimmt wird, dass eine Anomalie erfasst wird, einen Schritt des Ausführens (210) einer Schutzfunktion,
wenn bestimmt wird, dass der Betrieb des Mikroschaltkreises normal ist, einen Schritt des Ausführens (215) einer Scheinfunktion, die die Schutzfunktion simuliert, indem sie von außerhalb des Mikroschaltkreises auf im Wesentlichen identische Art wie die Schutzfunktion wahrnehmbar ist,
wobei das Verfahren **dadurch gekennzeichnet ist, dass** es eine Unterbrechung (250) der Ausführung der Scheinfunktion durch einen Verzögerer umfasst.

2. Verfahren nach Anspruch 1, **dadurch gekennzeichnet, dass** die Scheinfunktion einen Stromverbrauch hat, der im Wesentlichen gleich wie der der Schutzfunktion ist, oder dass die Scheinfunktion ein elektromagnetisches Strahlen hat, das im Wesentlichen gleich ist wie das der Schutzfunktion.

3. Verfahren nach einem der Ansprüche 1 bis 2, **dadurch gekennzeichnet, dass** die Schutzfunktion einen Zugang zu einer ersten Zone (Z1) eines nicht flüchtigen Speichers (130) umfasst, und dass die Scheinfunktion einen Zugang zu einer zweiten Zone (Z2) dieses nicht flüchtigen Speichers (130), die von der ersten Zone (Z1) verschieden ist, umfasst.

4. Verfahren nach Anspruch 3, **dadurch gekennzeichnet, dass** die Schutzfunktion einen Befehl zum Schreiben einer vorbestimmten Angabe in die erste Zone (Z1) des nicht flüchtigen Speichers (130) umfasst.

5. Verfahren nach einem der Ansprüche 3 bis 4, **dadurch gekennzeichnet, dass** die Scheinfunktion einen Befehl zum Schreiben in die zweite Zone (Z2) des nicht flüchtigen Speichers (130) umfasst.

6. Verfahren nach Anspruch 5, **dadurch gekennzeichnet, dass** der Verzögerer die Ausführung des Schreibbefehls der Scheinfunktion unterbricht.

7. Verfahren zum Absichern nach einem der Ansprüche 4 bis 6, **dadurch gekennzeichnet, dass** die Ausführung der Schreibbefehle der Schutzfunktion oder der Scheinfunktion einen unterschiedlichen Algorithmus der Schreibbefehle in dem nicht flüchtigen Speicher, die beim normalen Betrieb des Mikroschaltkreises ausgeführt werden, ausführen.

8. Verfahren nach einem der Ansprüche 4 bis 7, **dadurch gekennzeichnet, dass** mindestens einer der Schreibbefehle keine Prüfdaten eingreifen lässt.

9. Verfahren nach einem der Ansprüche 4 bis 8, **dadurch gekennzeichnet, dass** mindestens einer der Schreibbefehle kein erneutes Lesen der geschriebenen Angabe umfasst.

10. Verfahren nach einem der Ansprüche 4 bis 9, **dadurch gekennzeichnet, dass** mindestens einer der Schreibbefehle kein Löschen der Schreibzone umfasst.

11. Verfahren nach einem der Ansprüche 1 bis 10, **dadurch gekennzeichnet, dass** es einen Schritt des Startens des Verzögerers, einen Schritt des Ablaufens des Verzögerers und beim Ablaufen des Verzögerers einen Schritt des Ausführens (250) eines Unterbrechungsbefehls der Ausführung der Scheinfunktion umfasst.

12. Verfahren nach einem der Ansprüche 1 bis 11, **dadurch gekennzeichnet, dass** die Schutzfunktion eine Funktion zum Außerbetriebnehmen des Mikroschaltkreises ist.

13. Computerprogramm, das Anweisungen zum Umsetzen eines Verfahrens nach einem der Ansprüche 1 bis 12 umfasst, wenn es durch einen Mikroprozessor geladen und ausgeführt wird.

14. Datenträger, der durch einen Mikroprozessor gelesen werden kann, der die Anweisungen eines Computerprogramms zum Umsetzen eines Verfahrens nach einem der Ansprüche 1 bis 12 umfasst.

15. Vorrichtung zum Funktionserfüllen durch einen Mikroschaltkreis, die Folgendes umfasst:
Mittel zum Bestimmen (110, 120, 130, 150), ob eine Anomalie erfasst wird, oder ob der Betrieb des Mikroschaltkreises normal ist, und
Mittel zum Prüfen (110, 120, 130, 150), die dazu ausgelegt sind:
wenn bestimmt wird, dass eine Anomalie erfasst wird, eine Schutzfunktion auszuführen,
wenn bestimmt wird, dass der Betrieb des Mikroschaltkreises normal ist, eine Scheinfunktion auszuführen, die die Schutzfunktion simuliert, indem sie von außerhalb des Mikroschaltkreises auf im Wesentlichen identische Art wie die Schutzfunktion wahrnehmbar ist,
wobei die Vorrichtung **dadurch gekennzeichnet ist, dass** die Prüfmittel einen Verzögerer verwenden, um die Ausführung der Scheinfunktion zu unterbrechen.

## Claims

1. Method for the performance of a function by a microcircuit, including:
at least one step of determining (205) whether an anomaly is detected or whether the operation of the microcircuit is normal;
when it is determined that an anomaly is detected, a step of performing (210) a protection function;
when it is determined that the operation of the microcircuit is normal, a step of performing (215) a decoy function simulating the protection function by being perceptible, from the outside of the microcircuit, in a manner more or less identical to the protection function;
said method being **characterized in that** it includes an interruption (250) of the performance of the decoy function by a timer.

2. Method according to claim 1, **characterized in that** the decoy function has a power consumption more or less identical to that of the protection function; or the decoy function has an electromagnetic radiation more or less identical to that of the protection function.

3. Method according to any one of claims 1 to 2, **characterized in that** the protection function includes access to a first area (Z1) of a non-volatile memory (130), and **in that** the decoy function includes an access to a second area (Z2) of this non-volatile memory (130) different from the first area (Zl).

4. Method according to claim 3, **characterized in that** the protection function includes a command to write a predetermined datum in the first area (Z1) of the non-volatile memory (130).

5. Method according to any one of claims 3 to 4, **characterized in that** the decoy function includes a command to write in the second area (Z2) of the non-volatile memory (130).

6. Method according to claim 5, **characterized in that** the timer interrupts the execution of the write command of the decoy function.

7. Protection method according to any one of claims 4 to 6, **characterized in that** the execution of the write commands of the protection function or the decoy function implements an algorithm differing from that of the commands to write in the non-volatile memory, carried out during the normal operation of the microcircuit.

8. Method according to any one of claims 4 to 7, **characterized in that** at least one of the write commands does not entail the use of any check datum.

9. Method according to any one of claims 4 to 8, **characterized in that** at least one of the write commands does not include the rereading of the written datum.

10. Method according to any one of claims 4 to 9, **characterized in that** at least one of the write commands does not include the erasure of the write area.

11. Method according to any one of claims 1 to 10, **characterized in that** it includes a step of starting the timer, a step of expiry of the timer and, on expiry of the timer, a step of executing (250) a command to interrupt the performance of the decoy function.

12. Method according to any one of claims 1 to 11, **characterized in that** the protection function is a function of disabling the microcircuit.

13. Computer program including instructions for carrying out a method according to any one of claims 1 to 12, when it is loaded and executed by a microprocessor.

14. Information medium readable by a microprocessor, including the instructions of a computer program to carry out a method according to any one of claims 1 to 12.

15. Device for the performance of a function by a microcircuit, including:
means for determining (110, 120, 130, 150) whether an anomaly is detected or whether the operation of the microcircuit is normal; and
monitoring means (110, 120, 130, 150), suitable:
when it is determined that an anomaly is detected, for performing a protection function;
when it is determined that the operation of the microcircuit is normal, for performing a decoy function simulating the protection function by being perceptible, from the outside of the microcircuit, in a manner more or less identical to the protection function;
said device being **characterized in that** the monitoring means use a timer in order to interrupt the performance of the decoy function.
